# EUROPEAN PATENT SPECIFICATION

(11) **EP 3 442 304 B1**
(45) Date of publication and mention of the grant of the patent: **23.09.2020**
(21) Application number: 18187587.3
(22) Date of filing: 06.08.2018
(51) Int. Cl.: H04W 76/18, H04W 76/15

(54) **METHOD OF HANDLING RADIO LINK FAILURE AND RELATED COMMUNICATION DEVICE**
VERFAHREN ZUR HANDHABUNG VON FUNKVERBINDUNGSFEHLERN UND ZUGEHÖRIGE KOMMUNIKATIONSVORRICHTUNG
PROCÉDÉ DE MANIPULATION D'UNE LIAISON RADIO DÉFAILLANTE ET DISPOSITIF DE COMMUNICATION ASSOCIÉ

(30) Priority: 07.08.2017 US 201762541796 P
(43) Date of publication of application: 13.02.2019
(73) Proprietor: HTC Corporation, Taoyuan City 330, (TW)
(72) Inventor: WU, Chih-Hsiang, 330 Taoyuan City (TW)
(74) Representative: Carstens, Dirk Wilhelm

(56) References cited:
- EP-A1- 2 903 342
- WO-A1-2011/100673

## Description

### Background of the Invention

### 1. Field of the Invention

The present invention relates to a method and communication device used in a wireless communication system, and more particularly, to a method and communication device of handling radio link failure.

### 2. Description of the Prior Art

A new radio (NR) system, initiated by the third generation partnership project (3GPP), is now being regarded as a new radio interface and radio network architecture that provides a high data rate, low latency, packet optimization, and improved system capacity and coverage.

When bandwidth parts (BWPs) is used for communication between a UE and a cell of a BS, it is not clear how the UEs or the BS handle the Radio Link Failure detected on the BWPs.

EP 2 903 342 A1 discloses mobile communication system including a mobile station, a first base station and a second base station configured to perform radio communication with the mobile station, and a gateway station configured to perform communication with the first base station and the second base station or with the mobile station via the first base station and the second base station. One communication is performed between the mobile station and the gateway station by establishing a first communication connection between the gateway station and the first base station, a first radio communication connection between the first base station and the mobile station, and a second radio communication connection between the second base station and the mobile station.

WO 2011/100673 A1 discloses a wireless communication network for enhancing cell-edge performance of a wireless transmit/receive unit (WTRU). The WTRU establishes a connection with a plurality of sites via respective downlinks (DLs) . Each DL includes at least one DL component carrier (CC) that operates on a frequency that is the same or different than one or more of the other CCs. The sites manipulate their transmit power for a particular CC operating frequency such that the distance from a particular one of the sites to its cell boundary becomes larger by increasing its transmit power on the particular frequency, and the distance from at least one of the other sites to its respective cell boundary becomes smaller by decreasing its transmit power on the particular frequency. A coverage overlap between different CC frequencies is created while maintaining a frequency reuse pattern of one.

### Summary of the Invention

With this in mind, it is one object of the present invention to provide a method for handling the radio link failure at both the base station and the user equipment.

According to one aspect of the present invention, a communication device configurable to handling radio link failure in a new radio communication system is provided as set forth in claim 1. According to another aspect of the present invention, a communication device configurable to handling radio link failure in a new radio communication system is provided as set forth in claim 5. According to another aspect of the present invention, a method of handling radio link failure at a base station in a new radio communication system is provided as set forth in claim 9. Preferred embodiments of the present invention may be gathered from the dependent claims..

These and other objectives of the present invention will no doubt become obvious to those of ordinary skill in the art after reading the following detailed description of the preferred embodiment that is illustrated in the various figures and drawings.

### Brief Description of the Drawings

FIG. 1 is a schematic diagram of a wireless communication system according to an example of the present invention.
FIG. 2 is a schematic diagram of a communication device according to an example of the present invention.
FIG. 3 is an example of bandwidth parts (BWPs) according to an example of the present invention.
FIG. 4 is a flow chart regarding a process of handling a radio link failure (RLF) at a user equipment according to a first example of the present invention.
FIG. 5 is a flow chart regarding a process of handling a RLF at a user equipment according to a second example of the present invention.
FIG. 6 is a flow chart regarding a process of handling a RLF at a base station according to a third example of the present invention.

### Detailed Description

Reference throughout this specification to "one example/embodiment" or "an example/embodiment" means that a particular feature, structure, or characteristic described in connection with the example/embodiment is included in at least one example/embodiment of the present invention. Thus, the appearances of the phrases "in one example/embodiment" or "in an example/embodiment" in various places throughout this specification are not necessarily all referring to the same example/embodiment. Furthermore, the particular features, structures, or characteristics may be combined in any suitable manner in one or more examples/embodiments.

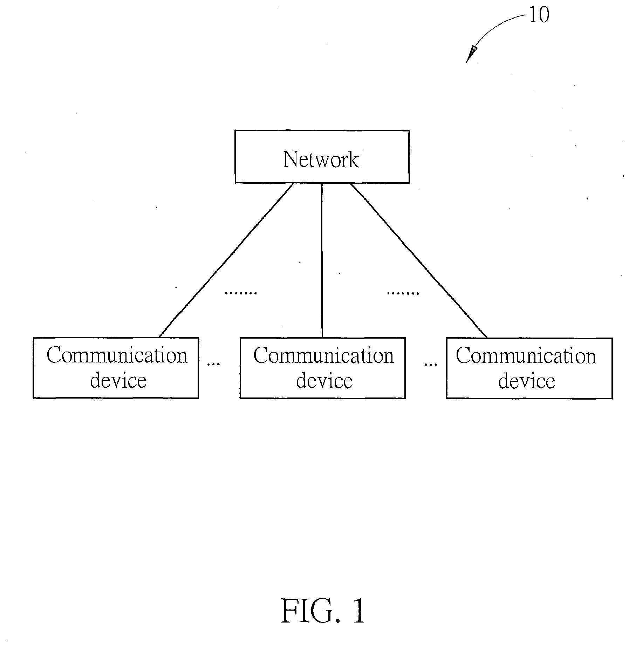

Please refer to FIG. 1, which is a schematic diagram of a wireless communication system 10 according to an example of the present invention. The wireless communication system 10 is briefly composed of a network and a plurality of communication devices. The network and a communication device communicate with each other via one or more carriers of licensed band(s) and/or unlicensed band(s) or via one or multiple cells belonging to one or multiple base stations (BSs).

In FIG. 1, the network and the communication devices are simply utilized for illustrating the structure of the wireless communication system 10. The network may include at least one radio access network (RAN) and a core network. Each of the at least one RAN may include at least one base station (BS). In one example, one of the at least one RAN may be a new radio (NR) or next generation (NG) RAN (or called 5G RAN). In one example, the core network may be a 5G core network (5GC).

A communication device may be a user equipment (UE), a mobile phone, a laptop, a tablet computer, an electronic book, a portable computer system, a vehicle, a ship or an aircraft. In addition, the network and the communication device can be seen as a transmitter or a receiver according to direction (i.e. , transmission direction), e.g., for an uplink (UL), the communication device is the transmitter and the network is the receiver, and for a downlink (DL), the network is the transmitter and the communication device is the receiver.

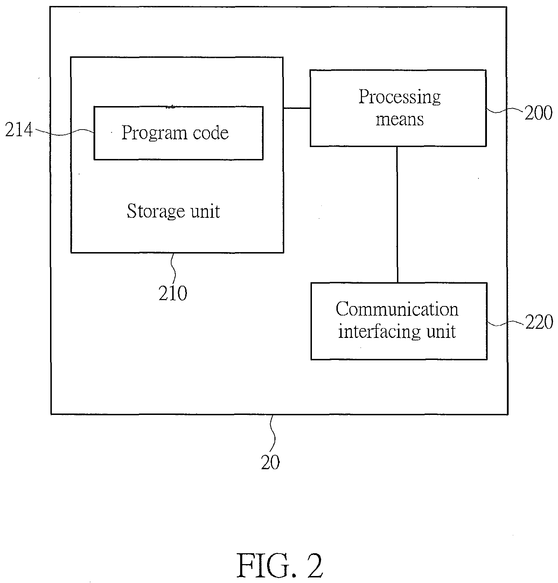

FIG. 2 is a schematic diagram of a communication device 20 according to an example of the present invention. The communication device 20 may be a communication device or the network shown in Fig. 1, but is not limited herein. The communication device 20 may include a processing circuit 200 such as a microprocessor or Application Specific Integrated Circuit (ASIC), a storage device 210 and a communication interfacing device 220. The storage device 210 may be any data storage device that may store a program code 214, accessed and executed by the processing circuit 200. Examples of the storage device 210 include but are not limited to a subscriber identity module (SIM), read-only memory (ROM), flash memory, random-access memory (RAM), hard disk, optical data storage device, non-volatile storage device, non-transitory computer-readable medium (e.g., tangible media), etc. The communication interfacing device 220 includes at least one transceiver (i.e. receiver and/or transmitter) and is used to transmit and receive signals (e.g., data, messages and/or packets) according to processing results of the processing circuit 200.

For the sake of simplicity, UE is taken as an example of the communication device in the following embodiments. It should be noted that the scope of the invention is not limited thereto.

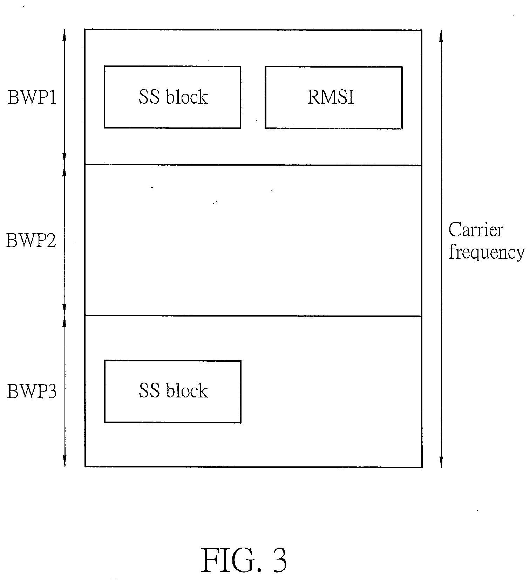

FIG. 3 is an example of bandwidth parts (BWPs). There may be three types of BWPs belonging to a carrier (e.g. component carrier) used for communication between the UE and a cell of a BS:
- BWP with synchronization signal block (SSB) and remaining system information (RMSI) as shown in BWP type 1 (BWP1).
- BWP without SSB and the RMSI as shown in BWP type 2 (BWP2).
- BWP with SSB and without the RMSI as shown in BWP type 3 (BWP3) .

The SSB may comprise primary synchronization signal (PSS), secondary synchronization signal (SSS) and physical broadcast channel (PBCH). A DL carrier may have no BWP (i.e. the whole DL carrier is a BWP) or have at least two of BWPs of which each is one of the three types. A UL carrier may have no BWP or have at least two BWPs of which each is as BWP2, i.e. no SSB is transmitted on an uplink BWP. In a TDD carrier, an uplink transmission duration (e.g. transmission time interval (s) (TTI(s)), slot(s), mini-slot(s) has no SSB.

A NR BS (i.e. gNB) broadcasts SSBs in a pattern or periodically. A SSB may have a SSB index (e.g. 6 bits) indicating/identifying the SSB. The SSB index may be carried in PBCH on which a master information block (MIB) and demodulation reference signal(s) are transmitted by the BS.

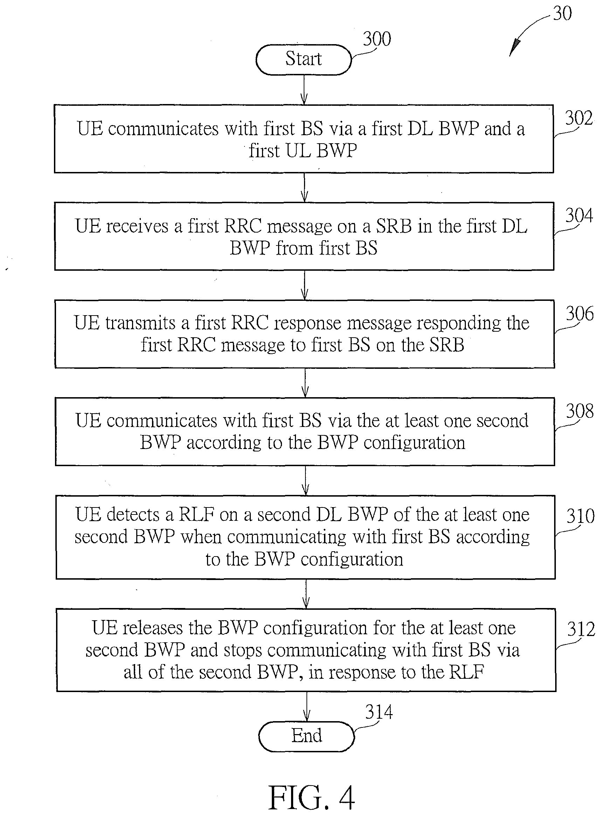

A process 30 in FIG. 4 may be utilized in a UE in a network (e.g. in Fig. 1), and includes the following steps:
Step 300: Start.
Step 302: The UE communicates with a first BS via a first DL bandwidth part (BWP) and a first UL BWP of a first cell belonging to the first BS.
Step 304: The UE receives a first radio link control (RRC) message on a signaling radio bearer (SRB) in (or on) the first DL BWP from the first BS, wherein the first RRC message configures a BWP configuration configuring at least one second BWP of the first cell to the UE.
Step 306: The UE transmits a first RRC response message responding the first RRC message to the first BS on the SRB.
Step 308: The UE communicates with the first BS via the at least one second BWP of the first cell belonging to the first BS according to the BWP configuration.
Step 310: The UE detects a radio link failure (RLF) on a second DL BWP of the at least one second BWP when communicating with the first BS according to the BWP configuration.
Step 312: The UE stops communicating with the first BS via all of the at least one second BWP, in response to the RLF.
Step 314: End.

In one example, the UE releases the BWP configuration for the at least one second BWP. all of the BWPs in the process 30 belong to the first cell and a carrier identified by an absolute radio-frequency channel number (ARFCN). The first DL BWP and the first UL BWP may be completely overlapped (e.g. the first DL BWP and the first UL BWP are the same BWP.), partially overlapped or non-overlapped in frequency domain. For the completely overlapped case, the first DL BWP may include the first UL BWP or the first UL BWP may include the first DL BWP. For the partially and completely overlapped case, the UE and the first BS may communicate with each other in a TDD mode in the first UL BWP and the first DL BWP. For the non-overlapped case, the UE and the first BS may communicate with each other in a FDD mode in the first UL BWP and the first DL BWP.

Each of the at least one second BWP may be a second DL BWP or a second UL BWP. If the second DL BWP and the second UL BWP are configured, the second DL BWP and the second UL BWP of the at least one second BWP may be completely overlapped (e.g. the second DL BWP and the second UL BWP are the same BWP.), partially overlapped or non-overlapped in frequency domain. For the completely overlapped case, the second DL BWP may include the second UL BWP or the second UL BWP may include the second DL BWP. For the partially and completely overlapped case, the UE and the first BS may communicate with each other in a TDD mode in the second UL BWP and the second DL BWP. For the non-overlapped case, the UE and the first BS may communicate with each other in a FDD mode in the second UL BWP and the second DL BWP.

In one example, the UE communicates with the first BS in the second DL BWP and the second UL BWP in response to the first RRC message when/while communicating with the first BS in the first DL BWP and the first UL BWP. In one example, the first RRC message may configure the UE to stop transmitting in the first UL BWP (i.e. stop using the first UL BWP). Thus, the UE communicates with the first BS in the first DL BWP and the second DL BWP for DL and in the second UL BWP for UL, in response to the first RRC message. In one example, the first RRC message may configure the UE to use (i.e. receive in) the second DL BWP and does not configure the second UL BWP. Thus, the UE communicates with the first BS in the first DL BWP and the second DL BWP for DL and in the first UL BWP, in response to the first RRC message. In one example, the first RRC message may configure the UE to use (i.e. receive in) the second UL BWP and does not configure the second DL BWP. Thus, the UE communicates with the first BS in the first DL BWP for DL and in the first UL BWP and the second UL BWP, in response to the first RRC message. In one example, the first RRC message may configure the UE to stop transmitting in the first UL BWP (i.e. stop using the first UL BWP) and stop receiving in the second DL BWP. Thus, the UE stops transmitting in the first UL BWP, stops receiving in the first DL BWP, receives DL transmissions from the first BS in the second DL BWP and transmits UL transmissions in the second UL BWP to the first BS, in response to the first RRC message.

The UE may detect the RLF on the first DL BWP, if the first DL BWP is not released by the first RRC message. The UE may detect the RLF on the second DL BWP, if the second DL BWP is configured by the first RRC message. The UE may detect the RLF in response to (when) reaching a maximum number of (re)transmissions of a protocol data unit (PDU) . The PDU may be a radio link control (RLC) PDU or a Packet Data Convergence Protocol (PDCP) PDU. The UE may detect the RLF in response to (or when) detecting a random access problem.

The UE transmits a first RRC response message responding to the first RRC message to the first BS on the SRB via the first UL BWP or the second UL BWP (if configured). In one example, the UE may transmit the first RRC response message in the first UL BWP if the first RRC message does not configure the second UL BWP. In one example, the UE may transmit the first RRC response message in the second UL BWP if the first RRC message configures to release the first UL BWP (i.e. stop using the first UL BWP).

In one example, the first RRC message may include the ARFCN. In another example, the first RRC message may not include the ARFCN, i.e. implying using the ARFCN configured before. The first RRC message may include a location configuration configuring location (s) of the second DL BWP and/or the second UL BWP in the carrier. For example, the location configuration may configure a starting physical resource block (PRB) (e.g. a starting PRB number/index) and an end PRB (e.g. an end PRB number/index). The location configuration may configure the starting PRB and the number of PRBs from the starting PRB.

In one example, the first RRC message includes a first random-access channel (RACH) configuration configuring first RACH resources for the UE to perform a RA to the first UL BWP or the second UL BWP and configures a first association configuration associating the first RACH resources to a first SS block or a first channel state information reference signal (CSI-RS) transmitted on the second DL BWP.

In response to the first RRC message, the UE may transmit the first RA preamble to the first BS in (or on) at least one of the first RACH resources in the first UL BWP or the second UL BWP when the UE receives the first SS block or the first CSI-RS. The at least one of the first RACH resources may comprise time unit(s) and/or subcarrier(s) or PRB(s) . A time unit may be formed by a plurality of OFDM symbols, slot(s), mini-slot(s) or subframe(s)). A PRB comprises a plurality of subcarriers (e.g. 12 or 24 subcarriers). The first BS may receive the first RA preamble in (or on) the at least one of the first RACH resources in the first UL BWP or the second UL BWP.

The first BS may determine to use at least one transmit (Tx) beam associated to the first SS block or the first CSI-RS to transmit data in the second DL BWP to the UE according to/in response to the first RA preamble. That is, in response to the first RA preamble, the first BS may transmit control signals (e.g. PDCCH) and data (PDSCH) on the at least one Tx beam to the UE.

The first BS may transmit transmissions by a first plurality of Tx beams in the first DL BWP. The first BS may transmit transmissions by a second plurality of Tx beams in the second DL BWP. The first plurality of Tx beams may be same as or different from the second plurality of Tx beams. One or more of the first plurality of Tx beams may be same as one or more of the second plurality of Tx beams.

In one example, the first BS may transmit the random-access response (RAR) on the first DL BWP. When the first BS transmits the RAR on the first cell, the first BS may transmit the RAR on a Tx beam (i.e. narrow beam or wide beam) on the first cell, wherein the Tx beam is neither associated to the first SS block nor associated to the first CSI-RS. The Tx beam may be associated to a third SS block or a third CSI-RS transmitted in the first DL BWP.

In one example, the first BS may transmit the RAR on the second DL BWP. When the first BS transmits the RAR on the second DL BWP, the first BS may transmit the RAR on a Tx beam which is associated to (corresponding to) the first SS block or the first CSI-RS on the second DL BWP or which is associated to (corresponding to) the first RA preamble.

The first RACH resources comprise time (e.g. which OFDM symbol(s), slot(s) or subframe(s)) and/or frequency (e.g. which physical resource blocks or which subcarriers) resources and/or the first RA preamble. When the first RA preamble is configured by the first RACH resources, the RA preamble may a dedicated preamble. When the first RA preamble is not configured by the first RACH resources, the first RA preamble may be selected by the UE. The plurality of RA preambles may be configured in the first RACH configuration, predefined in a 3GPP specification or configured in a system information block included in the first RRC message or broadcast by the first BS in the second DL BWP.

In one example, the first BS may transmit a PDCCH order (i.e. a DCI) on the second DL BWP to the UE when/after transmitting the first RRC message or receiving the first RRC response message. The PDCCH order may indicate to the UE to use the first RA preamble and trigger the UE to transmit the first RA preamble. For example, the PDCCH order may include the preamble identifier associated to (or of or corresponding to) the first RA preamble.

In one example, the first association configuration includes a SS block index of the first SS block or a CSI-RS index (or called identifier/identity). In one example, the first association configuration includes a CSI-RS configuration of the first CSI-RS. The CSI-RS configuration may configure time and/or frequency resource of the first CS-RS. The CSI-RS configuration may include the CSI-RS index. The first BS may transmit the CSI-RS configuration to the UE in a RRC message before the first RRC message.

In one example, the first RACH configuration may include second RACH resources and a second association configuration associating the second RACH resources to a second SS block or a second CSI-RS transmitted on the second DL BWP. Then, the UE may determine to use the first RACH resources instead of the second RACH resources when a signal strength of the first SS block (or the first CSI-RS) measured/received by the UE is better than a signal strength of the second SS block (or the second CSI-RS) measured/received by the UE. In another example, the first RRC message may include a second RACH configuration including the second RACH resources and the second association configuration. In one example, the first RA preamble may be configured in the first RACH configuration and associated to the first RACH resources and/or the first SS block (or the first CSI-RS). In another example, the first RA preamble may be selected from a plurality of RA preambles. The plurality of RA preambles may be configured in the first RACH configuration, predefined in a 3GPP specification or configured in a system information block included in the first RRC message or broadcast by the first BS on the second DL BWP.

In one example, the first BS may transmit the PDCCH order together with the first SS block or the first CSI-RS in a time unit in the second DL BWP. In one example, the first BS may transmit the PDCCH order with the first SS block or the first CSI-RS in a first time unit in the second DL BWP and transmit the PDCCH order with the second SS block or the second CS-RS in a second time unit in the second DL BWP.

In the examples above, the UE may determine to use the second RACH resources instead of the first RACH resources when a signal strength of the second SS block (or the second CSI-RS) measured/received by the UE is better than a signal strength of the first SS block (or the first CSI-RS) measured/received by the UE. In response to the determination, the UE may transmit the first RA preamble or a second RA preamble in at least one of the first RACH resources. In one example, the second RA preamble may be configured in the first RACH configuration and associated to the second RACH resources and/or the second SS block (or the second CSI-RS) . In another example, the second RA preamble may be selected from a plurality of RA preambles. The plurality of RA preambles may be configured in the first RACH configuration, predefined in a 3GPP specification or configured in a system information block included in the first RRC message or broadcast by the first BS on the second DL BWP.

In one example, the first BS may transmit a PDCCH order (i.e. a DCI) on the second DL BWP to the UE when/after transmitting the first RRC message or receiving the first RRC response message. The PDCCH order may indicate to the UE to use the second RA preamble and triggers the UE to transmit the second RA preamble. For example, the PDCCH order may include the preamble identifier associated to (or of or corresponding to) the second RA preamble.

The second RACH resources comprise time (e.g. which OFDM symbol(s), slot(s) or subframe(s)) and/or frequency (e.g. which physical resource blocks or which subcarriers) resources for the UE to perform the random access in the first UL BWP or in the second UL BWP. In one example, the second association configuration may configure (or includes) a SS block index of the second SS block or a CSI-RS index of the second CSI-RS. In one example, the second association configuration includes a CSI-RS configuration of the second CSI-RS. The CSI-RS configuration may configure time and/or frequency resource of the second CS-RS. The CSI-RS configuration may include the CSI-RS index. The first BS may transmit the CSI-RS configuration to the UE in a RRC message before the first RRC message.

In one example, the first BS may determine the first association configuration according to a first measurement result received on the first UL BWP from the UE. The at least one measurement result may include a signal strength of the first SS block or a signal strength of the first CSI-RS. For example, the first measurement result may also include the SS block index of the first SS block or the CSI-RS index of the first CSI-RS. The first BS may determine the second association configuration according to at a second measurement result received from on the first UL BWP from the UE. The second measurement result may include a signal strength of the second SS block or a signal strength of the second CSI-RS. For example, the second measurement result may also include the SS block index of the second SS block or the CSI-RS index of the second CSI-RS.

The SRB is established for exchanging RRC messages between the UE and the BS. In one example, the UE may connect to the first BS (or the first BS may connect to the UE) by performing a RRC connection establishment procedure. In the RRC connection establishment procedure, the UE transmits a RRC Connection Request message to the first BS and receives a RRC Connection Setup message from the BS. When the UE receives the RRC Connection Setup message, the UE connects to the first BS and establishes the SRB in response to the RRC Connection Setup message. When the first BS transmits the RRC Connection Setup message, receives an acknowledgement message acknowledging the RRC connection Setup message or receives a RRC Connection Complete message responding the RRC Connection Setup message from the UE, the first BS connects to the UE.

In one example, the UE may connect to the first BS (or the first BS may connect to the UE) by performing a handover procedure initiated by a second BS. The second BS may transmit a handover command to the UE to initiate the handover procedure. When the first BS receives a handover complete message from the UE, the first BS connects to the UE. When the UE transmits the handover complete message to the first BS, the UE connects to the first BS. The handover command may include location configuration configuring location (s) of the first DL BWP and/or the first UL BWP. The location configuration may be as described for the location configuration of the second DL BWP and/or the second UL BWP.

In response to the RLF, the UE may initiate a RRC connection reestablishment procedure. In response to the RLF or in initiating the RRC connection reestablishment procedure, the UE may synchronize to the first DL BWP and perform a random access (RA) (e.g. to the first BS) via the first UL BWP. In the RA, the UE transmits a RA preamble in the first UL BWP (e.g. to the first BS) and receives a random access response (RAR) in the first DL BWP (e.g. from the first BS) . Then the UE may transmit a RRC Connection Reestablishment Request message in the first UL BWP (e.g. to the first BS) and receive a RRC Connection Reestablishment message in the first DL BWP (e.g. from the first BS) . The above may be applied when the first RRC message configures the UE to release the first DL BWP and/or the first UL BWP. The above may be applied when the first RRC message configures the UE not to release the first DL BWP and/or the first UL BWP.

To synchronize to the first DL BWP, the UE may synchronize to a PSS and/or a SSS of a SS block transmitted on the first DL BWP belonging to the first cell or a second cell. Besides, the UE may receive a master information block (MIB) in a PBCH of the SS block. Then the UE may receive at least one system information block (e.g. system information block (SIB) 1, and/or SIB2) transmitted on the first DL BWP. The MIB or one of the at least one SIB may include a third RACH configuration configuring third RACH resources for the UE to perform the RA in the first UL BWP and configures a third association configuration associating the third RACH resources to the SS block. The UE transmits the RA preamble in the first UL BWP to the first BS using the third RACH resources, e.g. in time and/or frequency resources configured in the third RACH resources. The RA preamble may be configured in the third RACH configuration.

In response to the RLF or the RRC connection reestablishment procedure, the UE may keep at least one configuration received from the first BS before the first RRC message. For example, the at least one configuration may include a UE temporary identifier (e.g. cell radio network temporary identifier) . The at least one configuration may include a SRB configuration. The at least one configuration may include a data radio bearer (DRB) configuration. The at least one configuration may include a CSI-RS configuration. The at least one configuration may include a measurement configuration. The measurement configuration may or may not be associated to a CSI-RS configuration. The UE keeps using the at least one configuration when or after the UE successfully completes the RRC connection reestablishment procedure. For example, the UE may transmit a channel quality indicator, a channel state information indicator or a beam quality indicator associated to a CSI-RS configured in the CSI-RS configuration when the UE receives the RRC Connection Reestablishment message. For example, the UE may transmit a measurement report associated to the measurement configuration when the UE receives the RRC Connection Reestablishment message.

In response to the RLF or the RRC connection reestablishment procedure, the UE may release at least one configuration received from the first BS before the first RRC message. The at least one configuration may include a CSI-RS configuration. The at least one configuration may include a measurement configuration. The measurement configuration may or may not be associated to a CSI-RS configuration which may or may not be released by the UE in response to the RLF or the RRC connection reestablishment procedure.

The RACH configuration above may include at least one information element (IE).

The RACH resources above may comprise time unit(s) and/or subcarrier (s) or physical resource block(s) (PRB(s)). A time unit may be formed by a plurality of OFDM symbols, slot (s), mini-slot (s) or subframe(s)). A PRB comprises a plurality of subcarriers (e.g. 12 or 24 subcarriers) . The first, second and third RACH resources above may be different. The first, second and third SS blocks may be different. The first, second and third CSI-RSs may be different.

In one example, the first BS may receive a first UE capability of the UE from the UE, a core network or from the second BS. The first UE capability may be related to beamforming capability (e.g. beam correspondence supported or not) or random access capability. The first BS may determine the RACH resources (i.e. content of the RACH resources) according to the first UE capability. In one example, the first BS may receive a second UE capability of the UE from the UE, a core network or from the second BS. The second UE capability may be related to CSI-RS receiving capability (e.g. a CSI-RS is supported or not). The first BS may determine the RACH resources associated to the CSI-RS when the second UE capability indicates the CSI-RS is supported. The first BS may determine the RACH resources associated to the SS block when the second UE capability indicates the CSI-RS is not supported.

The first RRC message may be a RRC Reconfiguration message. The first RRC response message may be a RRC Reconfiguration Complete message. The first RRC message may be a RRC Setup message. The first RRC response message may be a RRC Setup Complete message. The first RRC message may be a RRC Resume message. The first RRC response message may be a RRC Resume Complete message.

Embodiments may be easily constructed by a skilled person according to description above. For example, an embodiment for a UE may be easily constructed as below.

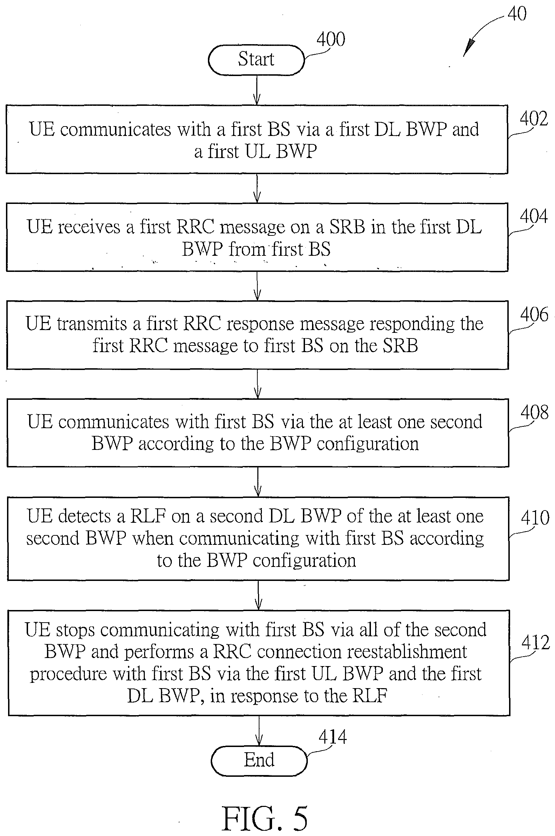

Please refer to FIG. 5, which illustrates a process 40 according to an example of the present invention is described below. The process 40 may be utilized in a UE in a network (e.g. in Fig. 1). The process 40 may be compiled into the program code 214 and includes the following steps:
Step 400: Start
Step 402: The UE communicates with a first BS via a first DL bandwidth part (BWP) and a first UL BWP of a first cell belonging to the first BS.
Step 404: The UE receives a first RRC message on a SRB in (or on) the first DL BWP from the first BS, wherein the first RRC message configures a BWP configuration configuring at least one second BWP of the first cell to the UE.
Step 406: The UE transmits a first RRC response message responding the first RRC message to the first BS on the SRB.
Step 408: The UE communicates with the first BS via the at least one second BWP of the first cell belonging to the first BS according to the BWP configuration.
Step 410: The UE detects a radio link failure (RLF) on a second DL BWP of the at least one second BWP when communicating with the first BS according to the BWP configuration.
Step 412: The UE stops communicating with the first BS via all of the at least one second BWP and performs a RRC connection reestablishment procedure with the first BS via the first UL BWP and the first DL BWP, in response to the RLF.
Step 414: End

In one example, the UE may not release the BWP configuration in response to neither the RLF nor the RRC connection reestablishment procedure. In one example, the UE may continue communicating with the first BS via the at least one second BWP when the UE receives the RRC Connection Reestablishment message. In one example, the UE may continue communicating with the first BS via the at least one second BWP when the UE receives a second RRC message (e.g. RRC Connection Reconfiguration message) which does not release the at least one second BWP from the first BS and/or receives an activation command activating the at least one second BWP from the first BS, after the RRC connection reestablishment procedure. The first BS may transmit the second RRC message and/or the activation command to the UE when receiving measurement result (s) measured on the at least one second BWP which is better than a threshold, from the UE. The first BS may transmit the second RRC message and/or the activation command to the UE when receiving channel quality indicator(s), channel state information indicator (s) or beam quality indicator (s) measured on the at least one second BWP which is better than a threshold, from the UE. The channel quality indicator(s), channel state information indicator(s) or beam quality indicator(s) may be associated to CSI-RS(s) configured in a CSI-RS configuration and the CSI-RS configuration is received by the UE from the first BS before the RLF, the second RRC message and/or the activation command. The UE may include the measurement result(s) in the RRC Connection Reestablishment Request message or in a RRC Connection Reestablishment Complete message responding to the RRC Connection Reestablishment message. The UE may include the measurement result (s) in a Measurement Report message. The UE may transmit the channel quality indicator(s), channel state information indicator(s) or beam quality indicator(s) in PUCCH(s).

In one example, the UE may not release the BWP configuration in response to neither the RLF nor the RRC connection reestablishment procedure. The UE may release the BWP configuration in response to the RRC Connection Reestablishment message or a third RRC message (e.g. RRC Connection Reconfiguration message) received after the RRC connection reestablishment procedure, wherein the RRC Connection Reestablishment message or the third RRC message configures to release the BWP configuration. In one example, the first BS may determine to release the BWP configuration in response to the RRC Connection Reestablishment Request message. In one example, the first BS may determine to release the BWP configuration when receiving measurement result (s) measured on the at least one second BWP worse than a threshold, from the UE. The UE may include the measurement result(s) in the RRC Connection Reestablishment Request message or in a RRC Connection Reestablishment Complete message responding to the RRC Connection Reestablishment message. The UE may include the measurement result (s) in a Measurement Report message. The first BS releases the BWP configuration in response to the determination.

In one example, the UE may release the BWP configuration in response to the RLF or the RRC connection reestablishment procedure. The first BS release the BWP configuration when receiving (or in response to) the RRC Connection Reestablishment Request message. The UE and the first BS may communicate with each other via the first UL BWP and the first DL BWP after the RLF or the RRC connection reestablishment procedure.

Description for the process 30 may be applied to the process 40 and is not repeated herein.

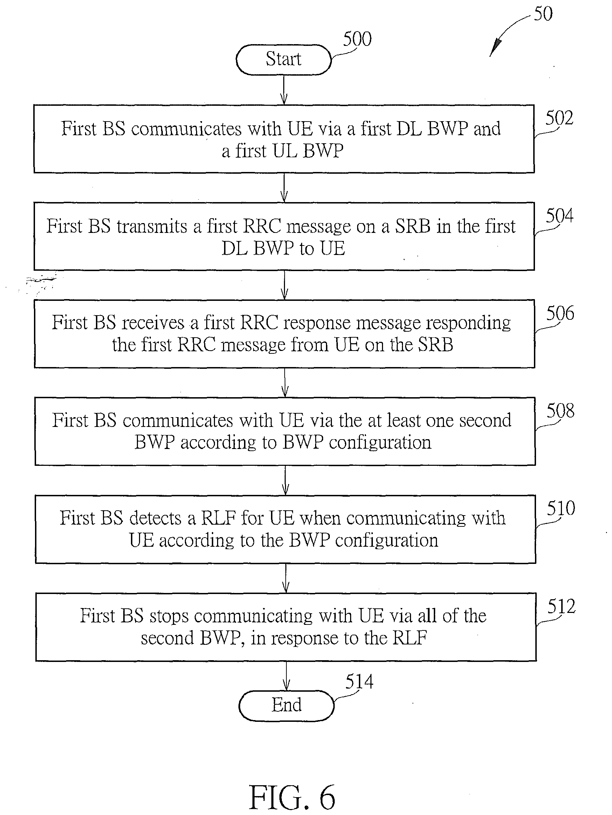

For example, an embodiment for a network may be easily constructed as below. Please refer to FIG.6, which illustrates a process 50 according to an example of the present invention is described below. The process 50 may be utilized a network (e.g. in Fig. 1) to handle a RRC connection reestablishment for a UE. The process 50 may be compiled into the program code 214 and includes the following steps:
Step 500: Start
Step 502: The first BS communicates with the UE via a first DL bandwidth part (BWP) and a first UL BWP of a first cell belonging to the first BS.
Step 504: The first BS transmits a first RRC message on a SRB in (or on) the first DL BWP to the UE, wherein the first RRC message configures a BWP configuration configuring at least one second BWP of the first cell to the UE.
Step 506: The first BS receives a first RRC response message responding the first RRC message from the UE on the SRB.
Step 508: The first BS communicates with the UE via the at least one second BWP of the first cell belonging to the first BS according to the BWP configuration.
Step 510: The first BS detects a radio link failure (RLF) for the UE when communicating with the UE according to the BWP configuration.
Step 512: The first BS stops communicating with the UE via all of the at least one second BWP, in response to the RLF.
Step 514: End

In one example, the first BS detects the RLF for the UE when receiving a RRC Connection Reestablishment Request message in the first UL BWP from the UE. That is, the first BS is informed by the UE of the RLF in the RRC Connection Reestablishment Request message. In one example, the first BS detects the RLF when the first BS does not receive a signal from the UE in the second UL BWP. The signal may be transmitted by the UE on a physical uplink control channel (PUCCH) . In one example, the first BS detects the RLF when the first BS does not receive data from the UE in the second UL BWP. The data may be transmitted by the UE on a physical uplink shared channel (PUSCH) . In one example, the first BS detects the RLF when the first BS does not receive a signal from the UE in the first UL BWP, if the first UL BWP is not released by the first RRC message. The signal may be transmitted by the UE on a physical uplink control channel (PUCCH) . In one example, the first BS detects the RLF when the first BS does not receive data from the UE in the first UL BWP, if the first UL BWP is not released by the first RRC message. The data may be transmitted by the UE on a physical uplink shared channel (PUSCH). In one example, the first BS detects the RLF in response to (when) reaching a maximum number of (re)transmissions of a protocol data unit (PDU) . The PDU may be a radio link control (RLC) PDU or a Packet Data Convergence Protocol (PDCP) PDU.

Description for the processes 30 and 40 may be applied to the process 50 and is not repeated herein.

It should be noted that although the above examples are illustrated to clarify the related operations of corresponding processes. The examples can be combined and/or modified arbitrarily according to system requirements and/or design considerations.

Those skilled in the art should readily make combinations, modifications and/or alterations on the abovementioned description and examples. The abovementioned description, steps and/or processes including suggested steps can be realized by means that could be hardware, software, firmware (known as a combination of a hardware device and computer instructions and data that reside as read-only software on the hardware device), an electronic system, or combination thereof. An example of the means may be the communication device 20.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A wireless communication device (20) configurable to handling radio link failure in a new radio, NR, communication system, comprising:
a storage unit (210), arranged to store a program code (214); and
a processing unit (200), coupled to the program code (214), arranged to read the program code (214) and execute the program code (214), thereby to perform steps of:
communicating (302) with a first base station via a first downlink, DL, bandwidth part, BWP, and a first uplink, UL, BWP of a cell belonging to the base station;
configuring at least one second BWP of the cell according to a radio resource control, RRC, message received via the first DL BWP from the base station;
communicating (308) with the base station via the at least one second BWP; and
detecting (310) a radio link failure, RLF, on a second DL BWP of the at least one second BWP and stopping communicating (312) with the base station via all of the at least one second BWP when the RLF is detected.

2. The wireless communication device of claim 1, further comprising means for :
receiving (304) the RRC message on a signaling radio bearer , SRB, in the second downlink BWP from the base station; and
transmitting (306) a RRC response message responding to the RRC message to the base station on the SRB via the first UL BWP or via a second UL BWP of the at least one second BWP.

3. The wireless communication device of claim 1, further comprising means for :
releasing (312) a BWP configuration for the at least one second BWP when the RLF is detected; and
keeping at least one configuration that is received from the base station before the RRC message, when the RLF is detected, wherein the at least one configuration includes a user equipment temporary identifier, a SRB configuration, a data radio bearer configuration, a channel state information reference signal, CSI-RS, configuration and a measurement configuration.

4. The wireless communication device of claim 1, wherein the RRC message includes an absolute radio frequency channel number, ARFCN, a location configuration for configuring physical resource blocks, or a random-access channel, RACH, configuration for configuring RACH resources.

5. A wireless communication device (20) configurable to handling radio link failure in a new radio, NR, communication system, comprising:
a storage unit (210), arranged to store a program code (214); and
a processing unit (200), coupled to the program code (214), arranged to read the program code (214) and execute the program code (214), thereby to perform steps of:
communicating (402) with a first base station via a first downlink, DL, bandwidth part, BWP, and a first uplink, UL, BWP of a cell belonging to the base station;
configuring at least one second BWP of the cell according to a radio resource control, RRC, message received on the first DL BWP from the base station;
communicating (408) with the base station via the at least one second BWP; and
detecting (410) a radio link failure, RLF, on a second DL BWP of the at least one second BWP; and
performing (412) an RRC connection reestablishment procedure with the base station via the first UL BWP and the first DL BWP, when the RLF is detected.

6. The wireless communication device of claim 5, further comprising means for :
continuing communicating with the base station via the at least one second BWP when receiving an RRC connection reestablishment message which does not release the at least one first BWP.

7. The wireless communication device of claim 5, further comprising means for :
continuing communicating with the base station via the at least one first BWP when receiving the activation command for activating the at least one first BWP after the RRC connection reestablishment procedure.

8. The wireless communication device of claim 5, further comprising means for :
releasing a BWP configuration for at least one first BWP according to an RRC connection reestablishment message or an RRC connection reconfiguration message that is received after the RRC connection reestablishment procedure.

9. A method of handling radio link failure at a base station in a new radio, NR, communication system, comprising:
communicating (502) with a user equipment via a first downlink, DL, bandwidth part, BWP, and a first uplink, UL, BWP of a cell belonging to the base station;
transmitting (504) a radio resource control, RRC, message to the user equipment for the user equipment to configure at least one second BWP of the cell;
communicating (508) with the user equipment via the at least one second BWP of the cell;
detecting (510) a radio link failure, RLF, and stopping communicating (512) with the user equipment via all of the at least one second BWP when the RLF is detected.

10. The method of claim 9, further comprising:
transmitting (504) the RRC message on a signaling radio bearer, SRB, in the first DL BWP to the user equipment; and
receiving (506) an RRC response message responding to the RRC message from the user equipment on the SRB via the first UL BWP or a second UL BWP of the at least one second BWP.

## Patentansprüche

1. Eine drahtlose Kommunikationsvorrichtung (20), die konfigurierbar ist zum Handhaben von Funkverbindungsausfällen in einem Neuen Funk-, NR- (NR = New Radio), Kommunikationssystem, die Folgendes aufweist:
eine Speichereinheit (210), angeordnet zum Speichern eines Programmcodes (214); und
eine Verarbeitungseinheit (200), gekoppelt mit dem Programmcode (214), angeordnet den Programmcode (214) zu lesen und den Programmcode (214) auszuführen, um dadurch die folgenden Schritte auszuführen:
Kommunizieren (302) mit einer ersten Basisstation über einen ersten Abwärtsstrecken-, DL- (DL = Downlink), Bandbreitenteil, BWP (BWP = Band Width Part), und einen ersten Aufwärtsstrecken-, UL- (UL = Uplink), BWP, einer Zelle, die zu Basisstation gehört;
Konfigurieren von mindestens einem zweiten BWP der Zelle gemäß einer Funkressourcensteuerungs-, RRC- (RRC = Radio Resource Control), Nachricht, empfangen über den ersten DL BWP von der Basisstation;
Kommunizieren (308) mit der Basisstation über den mindestens einen zweiten BWP; und
Detektieren (310) eines Funkverbindungsausfalls, RLF (RLF = Radio Link Failure), auf einem zweiten DL-BWP des mindestens einen zweiten BWP und Anhalten des Kommunizieren (312) mit der Basisstation über alle der mindestens einen zweiten BWP, wenn der RLF detektiert wird.

2. Die drahtlose Kommunikationsvorrichtung nach Anspruch 1, die ferner Mittel aufweist zum:
Empfangen (304) der RRC-Nachricht auf einem signalisierenden Funkträger, SRB, in der zweiten Abwärtsstrecken-BWP von der Basisstation; und
Senden (306) einer RRC-Antwortnachricht, die auf die RRC-Nachricht antwortet, an die Basisstation auf dem SRB über den ersten UL BWP oder über einen zweiten UL BWP des mindestens einen zweiten BWP.

3. Die drahtlose Kommunikationsvorrichtung nach Anspruch 1, die ferner Mittel aufweist zum:
Freigeben (312) einer BWP-Konfiguration für die mindestens einen zweiten BWP, wenn der RLF detektiert wird; und
Beibehalten von mindestens einer Konfiguration, die von der Basisstation vor der RRC-Nachricht empfangen wird, wenn der RLF detektiert wird, wobei die mindestens eine Konfiguration eine temporäre Benutzerausrüstungs-Kennung, eine SRB-Konfiguration, eine Datenfunkträgerkonfiguration, eine Kanalzustandsinformationsreferenzsignal-, CSI-RS- (CSI-RS = Channel State Information Reference Signal), Konfiguration und eine Messkonfiguration beinhaltet.

4. Die drahtlose Kommunikationsvorrichtung nach Anspruch 1, wobei die RRC-Nachricht eine absolute Funkfrequenzkanalnummer, ARFCN (ARFCN = Absolute Radio Frequency Channel Number), eine Standortkonfiguration zum Konfigurieren physikalischer Ressourcenblöcke oder eine Zufallszugriffkanal-, RACH- (RACH = Random Access Channel), Konfiguration zum Konfigurieren von RACH-Ressourcen beinhaltet.

5. Eine drahtlose Kommunikationsvorrichtung (20), die konfigurierbar ist, zum Handhaben von Funkverbindungsausfällen in einem Neuen Funk-, NR- (NR = New Radio), Kommunikationssystem, die Folgendes aufweist:
eine Speichereinheit (210), angeordnet zum Speichern eines Programmcodes (214); und
eine Verarbeitungseinheit (200), gekoppelt mit dem Programmcode (214), angeordnet den Programmcode (214) zu lesen und den Programmcode (214) auszuführen, um dadurch die folgenden Schritte auszuführen:
Kommunizieren (402) mit einer ersten Basisstation über einen ersten Abwärtsstrecken-, DL- (DL = Downlink), Bandbreitenteil, BWP (BWP = Band Width Part), und einen ersten Aufwärtsstrecken-, UL- (UL = Uplink), BWP, einer Zelle, die zu Basisstation gehört;
Konfigurieren von mindestens einem zweiten BWP der Zelle gemäß einer Funkressourcensteuerungs-, RRC- (RRC = Radio Resource Control), Nachricht, empfangen über den ersten DL BWP von der Basisstation;
Kommunizieren (408) mit der Basisstation über die mindestens eine zweite BWP; und
Detektieren (410) eines Funkverbindungsausfalls, RLF (RLF = Radio Link Failure), auf einem zweiten DL-BWP des mindestens einen zweiten BWP; und
Durchführen (412) einer RRC-Verbindungswiederherstellungsprozedur mit der Basisstation über den ersten UL BWP und den ersten DL BWP, wenn der RLF detektiert wird.

6. Die drahtlose Kommunikationsvorrichtung nach Anspruch 5, die ferner Mittel aufweist zum:
Fortsetzen zu Kommunizierens mit der Basisstation über den mindestens einen zweiten BWP, wenn eine RRC-Verbindungswiederherstellungsnachricht empfangen wird, die den mindestens einen ersten BWP nicht freigibt.

7. Die drahtlose Kommunikationsvorrichtung nach Anspruch 5, die ferner Mittel aufweist zum:
Fortsetzen des Kommunizierens mit der Basisstation über den mindestens einen ersten BWP, wenn der Aktivierungsbefehls zum Aktivieren des mindestens einen ersten BWP empfangen wird, nach der RRC-Verbindungswiederherstellungsprozedur.

8. Die drahtlose Kommunikationsvorrichtung nach Anspruch 5, die ferner Mittel aufweist zum:
Freigeben einer BWP-Konfiguration für mindestens einen ersten BWP gemäß einer RRC-Verbindungswiederherstellungsnachricht oder einer RRC-Verbindungsrekonfigurationsnachricht, die nach der RRC-Verbindungswiederherstellungsprozedur empfangen wird.

9. Ein Verfahren zum Handhaben von Funkverbindungsausfällen in einem neuen Funk-, NR- (NR = New Radio), Kommunikationssystem, das Folgendes aufweist:
Kommunizieren (502) mit einer Benutzerausrüstung über einen ersten Abwärtsstrecken-, DL- (DL = Downlink), Bandbreitenteil, BWP (BWP = Band Width Part), und einen ersten Aufwärtsstrecken-, UL- (UL = Uplink), BWP, einer Zelle, die zu Basisstation gehört;
Übertragen (504) einer Funkressourcensteuerungs-, RRC- (RRC = Radio Resource Control), Nachricht an die Benutzerausrüstung, damit die Benutzerausrüstung mindestens einen zweiten BWP der Zelle konfiguriert;
Kommunizieren (508) mit der Benutzerausrüstung über den mindestens einen zweiten BWP der Zelle;
Detektieren (510) eines Funkverbindungsausfalls, RLF (RLF = Radio Link Failure) und Anhalten des Kommunizierens (512) mit der Benutzerausrüstung über alle der mindestens einen zweiten BWP, wenn der RLF detektiert wird.

10. Das Verfahren nach Anspruch 9, das ferner Folgendes aufweist:
Übertragen (504) der RRC-Nachricht auf einem Signalisierungs-Funkträger, SRB (SRB = Signaling Radio Bearer), in dem ersten DL-BWP an die Benutzerausrüstung; und
Empfangen (506) einer RRC-Antwortnachricht, in Antwort auf die RRC-Nachricht von der Benutzerausrüstung auf dem SRB über den ersten UL BWP oder einen zweiten UL BWP des mindestens einen zweiten BWP.

## Revendications

1. Dispositif de communication sans fil (20) configurable pour gérer une défaillance de liaison radio dans un système de communication à nouvelle radio, NR, comprenant :
une unité de stockage (210), agencée pour stocker un code de programme (214) ; et
une unité de traitement (200), couplée au code de programme (214), agencée pour lire le code de programme (214) et exécuter le code de programme (214), pour mettre ainsi en œuvre les étapes de :
communication (302) avec une première station de base via une première partie de bande passante, BWP, de liaison descendante, DL, et une première BWP de liaison montante, UL, d'une cellule appartenant à la station de base ;
configuration d'au moins une deuxième BWP de la cellule conformément à un message de commande de ressources radio, RRC, reçu via la première BWP de DL en provenance de la station de base ;
communication (308) avec la station de base via ladite au moins une deuxième BWP ; et
détection (310) d'une défaillance de liaison radio, RLF, sur une deuxième BWP de DL de ladite au moins une deuxième BWP et l'arrêt de la communication (312) avec la station de base via l'ensemble de ladite au moins une deuxième BWP quand la RLF est détectée.

2. Dispositif de communication sans fil selon la revendication 1, comprenant en outre des moyens pour :
recevoir (304) le message de RRC sur un support radio de signalisation, SRB, dans la deuxième BWP de liaison descendante en provenance de la station de base ; et
transmettre (306) un message de réponse de RRC en réponse au message de RRC à la station de base sur le SRB via la première BWP de UL ou via une deuxième BWP de UL de ladite au moins une deuxième BWP.

3. Dispositif de communication sans fil selon la revendication 1, comprenant en outre des moyens pour :
libérer (312) une configuration de BWP pour ladite au moins une deuxième BWP quand la RLF est détectée ; et
conserver au moins une configuration qui est reçue en provenance de la station de base avant le message de RRC, quand la RLF est détectée, dans lequel ladite au moins une configuration comporte un identifiant temporaire d'équipement utilisateur, une configuration de SRB, une configuration de support radio de données, une configuration de signal de référence d'informations d'état de canal, CSI-RS, et une configuration de mesure.

4. Dispositif de communication sans fil selon la revendication 1, dans lequel le message de RRC comporte un numéro de canal radiofréquence absolu, ARFCN, une configuration d'emplacement destinée à configurer des blocs de ressources physiques, ou une configuration de canal d'accès aléatoire, RACH, destinée à configurer des ressources de RACH.

5. Dispositif de communication sans fil (20) configurable destiné à gérer une défaillance de liaison radio dans un système de communication à nouvelle radio, NR, comprenant :
une unité de stockage (210), agencée pour stocker un code de programme (214) ; et
une unité de traitement (200), couplée au code de programme (214), agencée pour lire le code de programme (214) et exécuter le code de programme (214), pour mettre ainsi en œuvre les étapes de :
communication (402) avec une première station de base via une première partie de bande passante, BWP, de liaison descendante, DL, et une première BWP de liaison montante, UL, d'une cellule appartenant à la station de base ;
configuration d'au moins une deuxième BWP de la cellule conformément à un message de RRC reçu sur la première BWP de DL en provenance de la station de base ;
communication (408) avec la station de base via ladite au moins une deuxième BWP ; et
détection (410) d'une défaillance de liaison radio, RLF, sur une deuxième BWP de DL de ladite au moins une deuxième BWP ; et
mise en œuvre (412) d'une procédure de rétablissement de la connexion de RRC avec la station de base via la première BWP de UL et la première BWP de DL, quand la RLF est détectée.

6. Dispositif de communication sans fil selon la revendication 5, comprenant en outre des moyens pour :
continuer la communication avec la station de base via ladite au moins une deuxième BWP au moment de la réception d'un message de rétablissement de connexion de RRC qui ne libère pas ladite au moins une première BWP.

7. Dispositif de communication sans fil selon la revendication 5, comprenant en outre des moyens pour :
continuer la communication avec la station de base via ladite au moins une première BWP au moment de la réception d'une commande d'activation pour activer ladite au moins une première BWP après la procédure de rétablissement de connexion de RRC.

8. Dispositif de communication sans fil selon la revendication 5, comprenant en outre des moyens pour :
libérer une configuration de BWP pour au moins une première BWP conformément à un message de rétablissement de connexion de RRC ou à un message de reconfiguration de connexion de RRC qui est reçu après la procédure de rétablissement de connexion de RRC.

9. Procédé de gestion d'une défaillance de liaison radio au niveau d'une station de base dans un système de communication à nouvelle radio, NR, comprenant les étapes suivantes :
la communication (502) avec un équipement utilisateur via une première partie de bande passante, BWP, de liaison descendante, DL, et une première BWP de liaison montante, UL, d'une cellule appartenant à la station de base ;
la transmission (504) d'un message de commande de ressources radio, RRC, à l'équipement utilisateur pour que l'équipement utilisateur configure au moins une deuxième BWP de la cellule ;
la communication (508) avec l'équipement utilisateur via ladite au moins une deuxième BWP de la cellule ;
la détection (510) d'une défaillance de liaison radio, RLF, et l'arrêt de la communication (512) avec l'équipement utilisateur via l'ensemble de ladite au moins une deuxième BWP quand la RLF est détectée.

10. Procédé selon la revendication 9, comprenant en outre les étapes suivantes :
la transmission (504) du message de RRC sur un support radio de signalisation, SRB, dans la première BWP de DL à l'équipement utilisateur ; et
la réception (506) d'un message de réponse de RRC en réponse au message de RRC en provenance de l'équipement utilisateur sur le SRB via la première BWP de UL ou une deuxième BWP de UL de ladite au moins une deuxième BWP.
